# FASCICULE DE BREVET EUROPEEN

(11) **EP 1 161 747 B1**
(45) Date de publication et mention de la délivrance du brevet: **05.01.2005**
(21) Numéro de dépôt: 00910995.0
(22) Date de dépôt: 17.03.2000
(51) Int. Cl.: G07B 15/02

(54) **PROCEDE DE GESTION DE STATIONNEMENT DE VEHICULES**
VERFAHREN ZUR VERWALTUNG DES PARKENS VON FAHRZEUGEN
VEHICLE PARKING LOT MANAGEMENT METHOD

(30) Priorité: 17.03.1999 FR 9903331; 02.09.1999 FR 9911021
(43) Date de publication de la demande: 12.12.2001
(73) Titulaire: Schlumberger Systèmes, 92120 Montrouge (FR)
(72) Inventeur: BRUSSEAUX, Thierry, F-25720 Avenay (FR)
(74) Mandataire: Lenne, Laurence
(86) Numéro de dépôt international: PCT/FR2000/000678
(87) Numéro de publication internationale: WO 2000/055816

(56) Documents cités:
- EP-A- 0 206 884
- EP-A- 0 447 312
- WO-A-96/11453
- WO-A-96/34366
- WO-A-97/13222
- WO-A-97/37328
- WO-A-97/45814
- WO-A-98/04080

## Description

La présente invention concerne un procédé de gestion de stationnement payant de véhicules, utilisant au moins un horodateur relié à un serveur de stationnement. L'invention trouve une application particulièrement avantageuse dans le domaine des parcs de stationnement à horodateurs.

On connaît, notamment de la demande internationale WO 96/11453, un système de gestion de stationnement payant construit autour d'un réseau de téléphonie mobile, dans lequel un usager appelle, au moyen de son téléphone mobile, un serveur de stationnement pour lui indiquer la zone de stationnement choisie, et fournir un identifiant du véhicule tel que le numéro d'immatriculation, et éventuellement un code personnel d'identification. Le serveur de stationnement enregistre les données de l'appel ainsi que l'heure de début de stationnement. Lorsque l'usager quitte le lieu de stationnement, il appelle à nouveau le serveur de stationnement pour l'informer de son départ. Compte tenu de la durée de stationnement et de la tarification en vigueur dans la zone de stationnement, le serveur peut calculer le prix à payer par l'usager et établir une facture soit directement, soit par l'intermédiaire de l'opérateur de téléphonie mobile.

Dans ce système connu, le contrôle s'effectue par des agents de surveillance équipés d'appareils portables leur permettant de consulter le serveur de stationnement par liaison téléphonique afin de savoir si les véhicules en stationnement, identifiés notamment par leur numéro d'immatriculation, ont bien été régulièrement enregistrés auprès du serveur.

Bien qu'il offre un certain nombre d'avantages, le système de gestion de stationnement payant qui vient d'être décrit en relation avec l'état de la technique présente néanmoins quelques inconvénients.

Pour l'usager du système, il est obligatoire de donner, et donc de payer, deux appels téléphoniques en direction du serveur, ce qui peut être très coûteux en comparaison du prix moyen de stationnement. Pour l'opérateur de stationnement, il est nécessaire de munir les agents de surveillance d'un équipement spécial dont le coût d'exploitation est important puisqu'il nécessite un appel téléphonique du serveur de stationnement. De plus, ce travail de surveillance est très long car il faut pour chaque véhicule taper son identifiant, numéro d'immatriculation ou numéro d'identification inscrit sur une étiquette placée de façon visible sur le véhicule.

D'autre part, ce système connu de gestion de stationnement payant n'est pas compatible avec les systèmes existants de paiement, comme les parcs d'horodateurs délivrant un ticket de stationnement à placer derrière le pare-brise du véhicule ou fournissant un listage des numéros de place ou des numéros d'immatriculation des véhicules en stationnement saisis aux horodateurs par les usagers. Il en résulte soit une perte d'information, soit la nécessité d'utiliser des logiciels plus complexes si l'on veut établir des états financiers ou des statistiques pour l'ensemble du système.

Enfin, on peut constater que, si l'usager oublie de signaler son départ au serveur, le temps de stationnement continue d'être débité, ce qui se traduira inévitablement par des contestations de factures.

Aussi, le problème technique à résoudre par l'objet de la présente invention est de proposer un système de gestion de stationnement payant de véhicules, utilisant au moins un horodateur relié à un serveur de stationnement, procédé qui permettrait d'appliquer les moyens de la téléphonie mobile au domaine de stationnement payant sans toutefois présenter les inconvénients mentionnés plus haut.

La solution du problème technique posé consiste, selon la présente invention, en ce que :
- un usager, muni d'un téléphone mobile abonné à un réseau de téléphonie mobile, transmet audit serveur de stationnement, au moins :
   . des informations concernant l'identification du lieu de stationnement de son véhicule,
   . des informations concernant le temps de stationnement,
- le serveur de stationnement transmet à l'horodateur, au moins, lesdites informations concernant le temps de stationnement,
- l'horodateur fournit à des moyens de contrôle d'autorisation de stationnement, au moins, les informations concernant le temps de stationnement,
- le prix du stationnement à payer est calculé à partir des informations concernant l'identification du lieu de stationnement et des informations concernant le temps de stationnement pour facturation à l'usager.

Ainsi, on comprend que, dans le procédé selon l'invention, l'horodateur détient les informations de temps de stationnement nécessaires au contrôle, et que, de ce fait, lesdits moyens de contrôle d'autorisation de stationnement pourront être plus simples et moins coûteux qu'une liaison par téléphone avec le serveur de stationnement.

Selon un premier mode de réalisation de l'invention, lesdits moyens de contrôle d'autorisation de stationnement sont constitués par un ticket de stationnement imprimé par l'horodateur à placer à l'intérieur du véhicule et portant les informations concernant le temps de stationnement. On retrouve ici une utilisation classique d'un horodateur dans sa fonction de délivrance d'un ticket de stationnement.

Selon un deuxième mode de réalisation de l'invention, lesdits moyens de contrôle d'autorisation de stationnement sont constitués par un listage fourni par l'horodateur ou par un appareil de contrôle portable, apte à recevoir des informations en provenance de l'horodateur. Dans ce dernier cas, l'appareil de contrôle portable reçoit les informations de l'horodateur soit par liaison infra-rouge, soit par liaison radio courte-distance. Ces liaisons étant gratuites, elles ne génèrent pas de coûts supplémentaires de communication.

Dans un mode de mise en oeuvre particulier du procédé, objet de l'invention, il est prévu que les informations concernant le temps de stationnement sont constituées par une durée de stationnement définie par l'usager. Ce mode de mise en oeuvre présente l'avantage qu'il ne nécessite qu'un appel téléphonique de l'usager à destination du serveur de stationnement, d'où une réduction de coût par rapport au système décrit dans la demande internationale WO 96/11453.

On remarquera enfin que le procédé conforme à l'invention se présente comme un nouveau moyen de paiement sur un horodateur, et que, de ce fait, il est compatible du point de vue comptabilité et statistiques avec les parcs d'horodateurs déjà existants.

La description qui va suivre en regard des dessins annexés, donnés à titre d'exemple non limitatifs, fera bien comprendre en quoi consiste l'invention et comment elle peut être réalisée.

La figure 1 est un schéma d'un premier mode de mise en oeuvre du procédé conforme à l'invention.

La figure 2 est un schéma d'un deuxième mode de mise en oeuvre du procédé conforme à l'invention.

La figure 3 est un schéma d'un troisième mode de mise en oeuvre du procédé conforme à l'invention.

La figure 4 est un schéma d'une variante de réalisation du mode de mise en oeuvre de la figure 3.

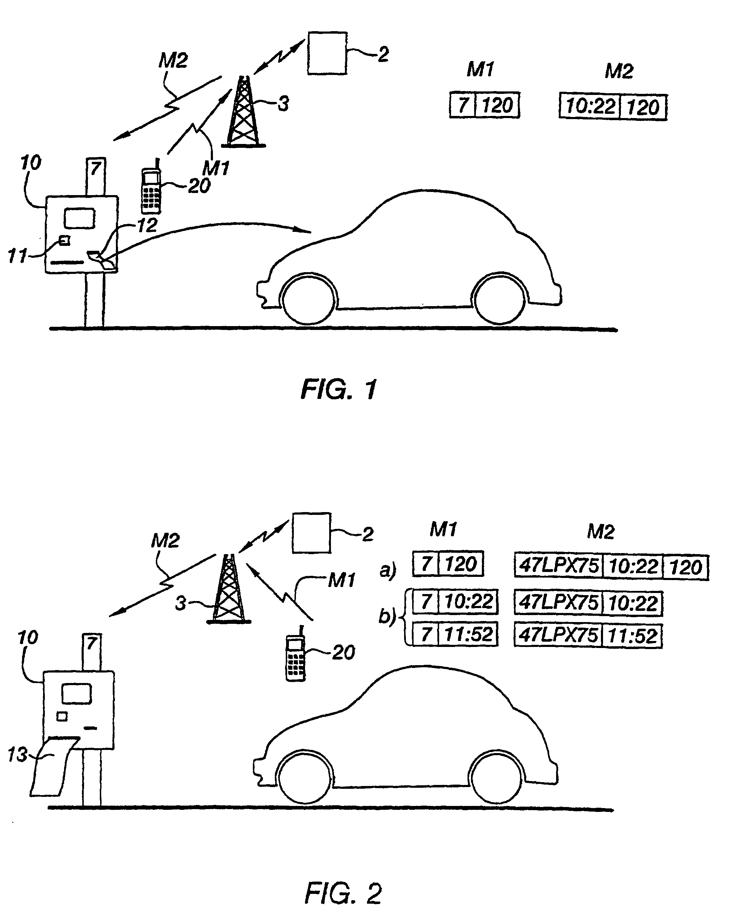

Le schéma de la figure 1 illustre un procédé de stationnement payant de véhicules, utilisant au moins un horodateur 10. Cet horodateur 10 fait partie d'un système de stationnement géré par un serveur 2 et auquel il est relié à travers un réseau 3 de téléphonie mobile.

Selon le procédé de stationnement payant montré à la figure 1, un usager, muni d'un téléphone mobile 20 abonné au réseau 3, se présente devant l'horodateur 10 et compose un message M1 sur son téléphone 20, ledit message comprenant des informations concernant l'identification du lieu de stationnement du véhicule, ici le numéro « 7 » de l'horodateur 10, et des informations concernant le temps de stationnement, ici la durée de 120 minutes par exemple. Puis, l'usager appuie sur une touche 11 de l'horodateur correspondant à la fonction « Paiement par téléphone ». L'horodateur 10 se met alors en attente de réception et l'usager envoie le message M1 en direction du serveur 2 de stationnement. Après réception du message M1, le serveur 2 émet à destination de l'horodateur 10, identifié par le serveur 2 à partir du numéro (« 7 ») contenu dans le message M1, un message M2 comprenant les informations reçues concernant le temps de stationnement, à savoir la durée de 120 minutes, et l'heure (10 :22) du début de stationnement. L'horodateur 10 peut alors imprimer un ticket 11, faisant office de moyen de contrôle d'autorisation de stationnement. Le ticket 11 indiquant la durée et l'heure de début de stationnement est placé à l'intérieur du véhicule de manière visible afin de permettre un contrôle visuel par les agents de surveillance.

Le prix de stationnement est calculé à partir des informations concernant le lieu de stationnement, lesquelles déterminent la tarification à appliquer, et la durée de stationnement. L'usager est débité de cette somme directement d'un compte auprès de l'opérateur du réseau 3 de téléphonie mobile ou du serveur 2 de stationnement.

D'autres modes de paiement peuvent être envisagés tels que le débit d'un compte prépayé auprès de l'opérateur du serveur 2 de stationnement. Pour recharger son compte, l'usager achète une carte prépayée grattable de 100F de droits de stationnement par exemple, appelle le serveur avec son téléphone mobile et tape le numéro inscrit sur la carte grattable, son compte prépayé est alors crédité de 100F. Lorsqu'il veut stationner, l'usager appelle le serveur de stationnement, son compte est alors reconnu par la carte SIM et le solde s'affiche à l'écran de manière à informer l'usager du montant des droits de stationnement dont il dispose.

On peut également utiliser un téléphone mobile 20 à double fente permettant la présence d'une carte SIM et d'un lecteur de cartes destiné à recevoir une carte porte-monnaie électronique ou bancaire afin d'effectuer des transactions par l'intermédiaire du téléphone mobile 20. Dans ce contexte, pour payer le prix de stationnement, l'usager introduit sa carte porte-monnaie électronique ou bancaire dans le lecteur de son téléphone mobile et effectue le règlement en liaison sécurisée avec le serveur 2 qui enregistre la transaction, débite la carte et fera la compensation avec les organismes bancaires.

Dans le mode de mise en oeuvre du procédé selon l'invention représenté sur la figure 2, l'usager, à son arrivée sur le lieu de stationnement, appelle le serveur 2 avec son téléphone mobile 20 et lui transmet un message M1 qui, dans le cas a), contient, comme dans l'exemple de la figure 1, d'une part, des informations concernant le lieu de stationnement, qui peuvent être le numéro (« 7 ») de l'horodateur 10 le plus proche, ou un numéro de zone, complété au besoin du nom de la ville, et, d'autre part, des informations concernant le temps de stationnement, ici la durée de 120 minutes. Le serveur 2 reçoit le message M1 et, au moyen d'une base de données interne permettant de relier le numéro d'abonné de l'usager au réseau de téléphonie mobile, numéro de carte SIM pour un réseau GSM par exemple, établit des informations d'identification du véhicule en stationnement, à savoir le numéro d'immatriculation (« 47LPX75 ») ou un numéro porté sur une étiquette apposée sur le véhicule. Ces informations d'identification du véhicule en stationnement sont transmises par le serveur 2 à au moins un horodateur 10 dans un message M2 qui contient également des informations concernant le temps de stationnement, c'est-à-dire la durée de 120 minutes par exemple, et l'heure (10 :22) de début de stationnement.

Le contrôle s'effectue de la façon suivante. A la demande d'un agent de surveillance, l'horodateur 10 fournit un listage 13 de contrôle d'autorisation de stationnement sur lequel sont indiquées les informations d'identification du véhicule en stationnement, numéro d'immatriculation ou d'identification, et les informations concernant le temps de stationnement, durée et heure de début de stationnement. De manière à actualiser les informations présentes dans l'horodateur, une mise à jour peut être effectuée périodiquement par le serveur 2 ou lorsque l'agent de surveillance demande à l'horodateur 10 de lui fournir le listage 13. La facturation à l'usager s'effectue comme dans le mode de mise en oeuvre représenté sur la figure 1.

La figure 2 montre en b), un autre exemple de réalisation selon lequel l'usager envoie un premier message téléphonique M1 fournissant au serveur 2 les informations concernant l'identification du lieu de stationnement et l'heure (10 :22) de début de stationnement.

Le serveur 2 transmet alors dans un premier message M2 à au moins un horodateur 10 l'heure de début de stationnement ainsi que les informations d'identification du véhicule, ici le numéro d'immatriculation, obtenues à partir de l'identification du téléphone mobile 20. Lors d'un contrôle, le listage 13 fourni par l'horodateur 10 à un agent de surveillance indiquera que le véhicule immatriculé « 47LPX75 » est autorisé à stationner depuis 10 :22.

Lorsque l'usager décide de quitter son stationnement, il envoie un deuxième message téléphonique M1 fournissant au serveur 2 les informations concernant l'identification du lieu de stationnement et l'heure (11 :52) de fin de stationnement. Le serveur 2 transmet alors dans un deuxième message M2 à au moins un horodateur 10 l'heure de fin de stationnement ainsi que les informations d'identification du véhicule. Lors d'un contrôle, le listage 13 aura fait disparaître depuis l'heure de fin de stationnement le numéro d'immatriculation « 47LPX75 », indiquant que le véhicule correspondant n'est plus en situation de stationnement autorisé.

Le prix à payer par l'usager est calculé à partir de la tarification en vigueur, déduite des informations concernant le lieu de stationnement, et de la durée de stationnement obtenue par la différence entre les heures de fin et de début de stationnement.

On notera que, dans ce mode de mise en oeuvre, l'usager paye pour la durée réelle du stationnement, alors que dans le cas de la figure 1 et le cas a) de la figure 2, le stationnement est prépayé pour une durée forfaitaire donnée. Par contre, l'usager doit effectuer deux appels téléphoniques au lieu d'un seul dans les cas précédents.

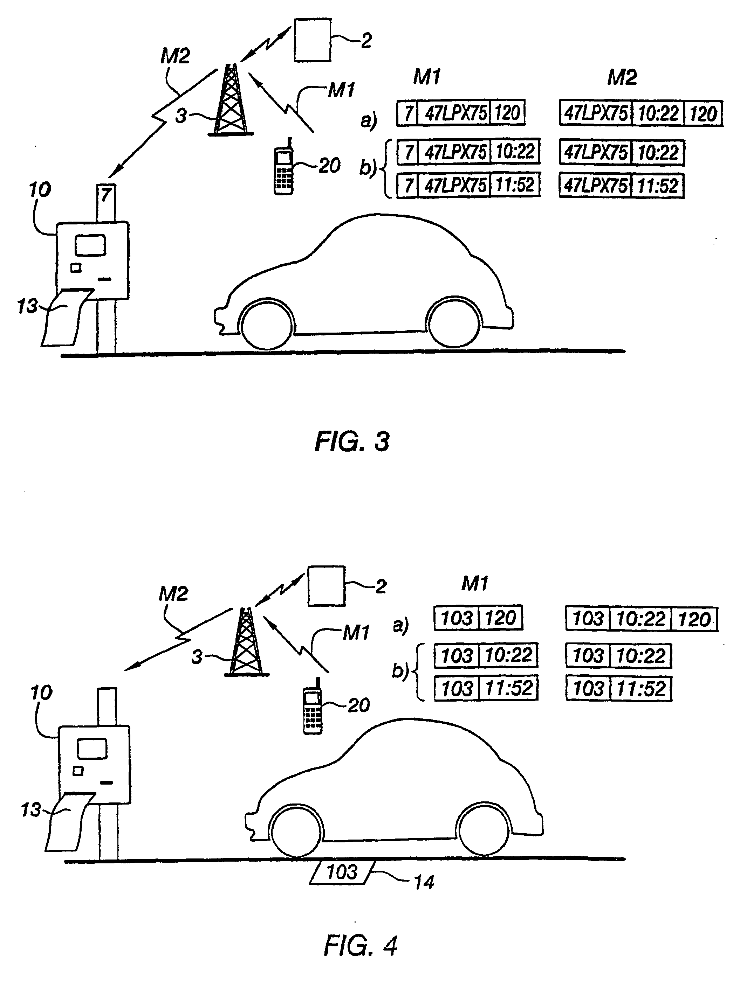

Les exemples de réalisation a) et b) de la figure 3 différent des exemples correspondants de la figure 2 par le fait que l'usager lui-même compose sur son téléphone mobile 20 les informations d'identification du véhicule en stationnement, ici le numéro d'immatriculation, lequel est ensuite transmis du serveur 2 à l'horodateur 10.

Les deux options précédentes sont possibles, à savoir prépaiement d'une durée de stationnement forfaitaire ou stationnement en temps réel.

Dans les exemples de mise en oeuvre a) et b) de la figure 4, les messages M1 envoyés par l'usager au serveur 2 indiquent un numéro caractéristique 14 (« 103 ») de l'emplacement de stationnement du véhicule qui sert à la fois d'informations d'identification du véhicule en stationnement et d'informations concernant l'identification du lieu de stationnement, destinées à la tarification. Le numéro 14 (« 103 ») est transmis à l'horodateur 10 ainsi que les informations concernant le temps de stationnement : durée (« 120 ») ou heures de début (10 :22) ou de fin (11 :52) de stationnement. En consultant le listage 13 fourni par l'horodateur 10, un agent de surveillance pourra constater qu'un véhicule stationné sur ledit emplacement « 103 » est autorisé à y stationner ou non.

Là encore, les options prépaiement ou temps réel sont possibles, ainsi que le paiement de stationnement pour plusieurs véhicules à la fois puisque les véhicules sont identifiés par le numéro d'emplacement de stationnement.

Le procédé de stationnement payant, objet de l'invention, a été décrit en regard des figures 2, 3 et 4 en mettant en oeuvre un listage 13 comme moyens de contrôle d'autorisation de stationnement. Il est bien évident que d'autres moyens pourraient être utilisés, tel qu'un dispositif portable apte à recevoir des informations de l'horodateur 10 par liaison infra-rouge ou radio courte-distance, comme celà a déjà été indiqué plus haut.

Il est également prévu que le serveur 2 de stationnement envoie au téléphone mobile 20 un certificat électronique calculé au moins à partir d'informations relatives à l'usager, comme son numéro d'abonné ou celui de sa carte SIM, des informations concernant l'identification du lieu de stationnement et des informations concernant le temps de stationnement. Ce certificat est stocké dans la mémoire du téléphone ou dans celle de la carte SIM. Si la mémoire le permet, plusieurs certificats (10 par exemple) peuvent être stockés dans un fichier tournant.

Ce certificat sert de justificatif à l'usager pour prouver son paiement en cas d'amende ou autre difficulté. Il peut alors se rendre auprès de l'opérateur du système de stationnement avec son téléphone mobile et faire constater son paiement grâce au certificat stocké en mémoire. Ce certificat sert aussi à l'usager de rappel de l' heure de fin de stationnement autorisé.

## Revendications

1. Procédé de gestion de stationnement payant de véhicules, utilisant au moins un horodateur (10) relié à un serveur (2) de stationnement, **caractérisé en ce que** :
- un usager, muni d'un téléphone mobile (20) abonné à un réseau (3) de téléphonie mobile, transmet audit serveur (2) de stationnement, au moins :
. des informations concernant l'identification du lieu de stationnement de son véhicule,
. des informations concernant le temps de stationnement,
- le serveur (2) de stationnement transmet à l'horodateur (10), au moins, lesdites informations concernant le temps de stationnement,
- l'horodateur (10) fournit à des moyens (12, 13, 14) de contrôle d'autorisation de stationnement, au moins, les informations concernant le temps de stationnement,
- le prix du stationnement à payer est calculé à partir des informations concernant l'identification du lieu de stationnement et des informations concernant le temps de stationnement pour facturation à l'usager.

2. Procédé selon la revendication 1, **caractérisé en ce que** les informations concernant le temps de stationnement sont constituées par une durée de stationnement définie par l'usager.

3. Procédé selon l'une des revendications 1 ou 2, **caractérisé en ce que** lesdits moyens de contrôle d'autorisation de stationnement sont constitués par un ticket (11) de stationnement imprimé par l'horodateur (10) à placer à l'intérieur du véhicule et portant les informations concernant le temps de stationnement.

4. Procédé selon la revendication 1, **caractérisé en ce que** le serveur (2) de stationnement transmet également à l'horodateur (10) des informations d'identification du véhicule en stationnement, et **en ce que** l'horodateur (10) fournit également auxdits moyens de contrôle d'autorisation de stationnement lesdites informations d'identification du véhicule en stationnement.

5. Procédé selon la revendication 4, **caractérisé en ce que** lesdites informations d'identification du véhicule en stationnement sont fournies par le serveur (2) de stationnement à partir de l'identification du téléphone mobile (20).

6. Procédé selon la revendication 5, **caractérisé en ce que** les informations d'identification du véhicule en stationnement sont le numéro d'immatriculation du véhicule ou un numéro d'identification apposé sur le véhicule.

7. Procédé selon la revendication 4, **caractérisé en ce que** lesdites informations d'identification du véhicule en stationnement sont transmises par l'usager au serveur (2) de stationnement au moyen de son téléphone mobile (20).

8. Procédé selon la revendication 7, **caractérisé en ce que** les informations d'identification du véhicule en stationnement sont le numéro d'immatriculation du véhicule ou un numéro caractéristique (14) de l'emplacement de stationnement du véhicule.

9. Procédé selon l'une quelconque des revendications 4 à 8, **caractérisé en ce que** les informations concernant le temps de stationnement sont constituées par la durée de stationnement désirée par l'usager.

10. Procédé selon l'une quelconque des revendications 4 à 8, **caractérisé en ce que** les informations concernant le temps de stationnement sont constituées par l'heure de début de stationnement et l'heure de fin de stationnement respectivement transmises au serveur (2) de stationnement à l'arrivée et au départ du véhicule du lieu de stationnement.

11. Procédé selon les revendications 9 ou 10, **caractérisé en ce que** lesdits moyens de contrôle d'autorisation de stationnement sont constitués par un listage (13) fourni par l'horodateur (10) ou par un appareil de contrôle portable apte à recevoir des informations en provenance de l'horodateur (10).

12. Procédé selon l'une quelconque des revendications 1 à 11, **caractérisé en ce que** les informations concernant l'identification du lieu de stationnement du véhicule sont constituées par un numéro caractéristique de l'horodateur (10) ou par un numéro caractéristique (14) de la zone tarifaire du lieu de stationnement.

13. Procéde selon l'une quelconque des revendications 1 à 12, **caractérisé en ce que** le serveur (2) de stationnement envoie au téléphone mobile (20) un certificat électronique calculé au moins à partir d'informations relatives à l'usager, des informations concernant le lieu de stationnement du véhicule et des informations concernant le temps de stationnement.

14. Procédé selon l'une quelconque des revendications 1 à 13, **caractérisé en ce que** le prix de stationnement est débité d'un compte auprès de l'opérateur du réseau (3) de téléphonie mobile ou du serveur (2) de stationnement.

15. Procédé selon l'une quelconque des revendications 1 à 13, **caractérisé en ce que** le prix de stationnement est débité d'un compte prépayé auprès de l'opérateur du serveur (2) de stationnement.

16. Procédé selon la revendication 15, **caractérisé en ce que** ledit compte prépayé est rechargeable au moyen d'une carte prépayée grattable.

17. Procédé selon l'une quelconque des revendications 1 à 13, **caractérisé en ce que** le prix de stationnement est débité d'une carte porte-monnaie électronique ou bancaire introduite dans le téléphone mobile (20).

## Claims

1. Method for managing paid vehicle parking, using at least one parking ticket machine (10) connected to a parking server (2), **characterized in that**:
- a user, provided with a mobile telephone (20) subscribed to a mobile telephone network (3), transmits to said parking server (2), at least:
- information on the identification of the location of the user's parked vehicle,
- information on parking time
- the parking server (2) transmits at least said information on parking time to the parking ticket machine (10),
- the parking ticket machine (10) sends at least the information on parking time to means (12,13,14) for controlling parking authorization,
- the parking price to be paid is calculated from the information on parking location identification and from information on parking time, for user invoicing.

2. Method as in claim 1, **characterized in that** the information on parking time consists of a user-defined parking period.

3. Method as in either of claims 1 or 2, **characterized in that** said means for controlling parking authorization consist of a parking ticket (11) printed by the ticket machine (10) to be placed inside the vehicle and indicating information on parking time.

4. Method as in claim 1, **characterized in that** the parking server (2) also transmits to the ticket machine (10) information on the identification of the parked vehicle, and **in that** the ticket machine (10) also provides said information on parked vehicle identification to said means for controlling parking authorization.

5. Method as in claim 4, **characterized in that** said information on parked vehicle identification is provided by the parking server (2) based on identification of the mobile telephone (20).

6. Method as in claim 5, **characterized in that** the information on parked vehicle identification is the vehicle's number plate or an identification number fixed to the vehicle.

7. Method as in claim 4, **characterized in that** the said information on parked vehicle identification is transmitted by the user to the parking server (2) via the user's mobile telephone (20).

8. Method as in claim 7, **characterized in that** the information on parked vehicle identification is the vehicle's number plate or a characteristic number (14) of the vehicle's parking space.

9. Method as in any of claims 4 to 8, **characterized in that** the information on parking time consists of a user-desired parking period.

10. Method as in any of claims 4 to 8, **characterized in that** the information on parking time consists of the parking start-time and the parking end-time respectively transmitted to the parking server (2) on the vehicle's arrival and departure time from the parking location.

11. Method as in claims 9 or 10, **characterized in that** said means for controlling parking authorization consist of a listing (13) provided by the ticket machine (10) or a portable controlling machine able to receive information from the ticket machine (10).

12. Method as in any of claims 1 to 11, **characterized in that** the information on identification of the parked vehicle's location consists of a characteristic number of the ticket machine (10) or a characteristic number of the price zone in which the parking space is located.

13. Method as in any of claims 1 to 12, **characterized in that** the parking server (2) sends an electronic certificate to the mobile telephone (20) that is calculated at least on the basis of information concerning the user, information on the vehicle's parking location and information on parking time.

14. Method as in any of claims 1 to 13, **characterized in that** the parking price is debited from an account with the operator of the mobile telephone network (3) or of the parking server (2).

15. Method as in any of claims 1 to 13, **characterized in that** the parking price is debited from a prepaid account with the operator of the parking server (2).

16. Method as in claim 15, **characterized in that** said prepaid account can be recharged by means of a prepaid scratch card.

17. Method as in any of claims 1 to 13 **characterized in that** the parking price is debited from a digital purse or from a bank card inserted in the mobile telephone (20).

## Patentansprüche

1. Verfahren zur Verwaltung des gebührenpflichtigen Parkens von Fahrzeugen, anhand mindestens eines Parkscheinautomats (10), der mit einem Parkserver (2) verbunden ist, **dadurch gekennzeichnet, dass**:
- ein Benutzer, der über ein Mobiltelefon (20) verfügt, das auf ein Mobilfunknetz (3) abonniert ist, dem Parkserver (2) mindestens folgendes überträgt:
- Informationen bezüglich der Identifizierung des Parkplatzes seines Fahrzeugs,
- Informationen bezüglich der Parkdauer,
- der Parkserver (2) dem Parkscheinautomat (10) mindestens die Informationen bezüglich der Parkdauer überträgt,
- der Parkscheinautomat (10) Mitteln (12, 13, 14) zur Parkgenehmigungskontrolle mindestens die Informationen bezüglich der Parkdauer überträgt,
- die zu bezahlende Parkgebühr ausgehend von den Informationen bezüglich der Identifizierung des Parkplatzes und den Informationen bezüglich der Parkdauer für die Inrechnungstellung des Benutzers berechnet wird.

2. Verfahren nach Anspruch 1, **dadurch gekennzeichnet, dass** die Informationen bezüglich der Parkdauer aus einer von dem Benutzer definierten Parkdauer bestehen.

3. Verfahren nach einem der Ansprüche 1 oder 2, **dadurch gekennzeichnet, dass** die Parkgenehmigungskontrollmittel aus einem von dem Parkscheinautomat (10) gedruckten Parkschein (11) bestehen, der im Innern des Fahrzeugs anzubringen ist und die Informationen bezüglich der Parkdauer aufweist.

4. Verfahren nach Anspruch 1, **dadurch gekennzeichnet, dass** der Parkserver (2) auch dem Parkscheinautomat (10) Informationen zur Identifizierung des parkenden Fahrzeugs überträgt, und dass der Parkscheinautomat (10) auch den Parkgenehmigungskontrollmitteln die Informationen zur Identifizierung des parkenden Fahrzeugs überträgt.

5. Verfahren nach Anspruch 4, **dadurch gekennzeichnet, dass** die Informationen zur Identifizierung des parkenden Fahrzeugs durch den Parkserver (2) ausgehend von der Identifizierung des Mobiltelefons (20) bereitgestellt werden.

6. Verfahren nach Anspruch 5, **dadurch gekennzeichnet, dass** die Informationen zur Identifizierung des parkenden Fahrzeugs die Zulassungsnummer des Fahrzeugs oder eine an dem Fahrzeug angebrachte Identifizierungsnummer sind.

7. Verfahren nach Anspruch 4, **dadurch gekennzeichnet, dass** die Informationen zur Identifizierung des parkenden Fahrzeugs dem Parkserver (2) durch den Benutzer über sein Mobiltelefon (20) übertragen werden.

8. Verfahren nach Anspruch 7, **dadurch gekennzeichnet, dass** die Informationen zur Identifizierung des parkenden Fahrzeugs die Zulassungsnummer des Fahrzeugs oder eine den Parkplatz des Fahrzeugs kennzeichnende Nummer (14) sind.

9. Verfahren nach einem der Ansprüche 4 bis 8, **dadurch gekennzeichnet, dass** die Informationen bezüglich der Parkdauer aus der von dem Benutzer gewünschten Parkdauer bestehen.

10. Verfahren nach einem der Ansprüche 4 bis 8, **dadurch gekennzeichnet, dass** die Informationen bezüglich der Parkdauer aus der Parkanfangszeit und der Parkendzeit bestehen, die dem Parkserver (2) jeweils bei der Ankunft und der Abfahrt des Fahrzeugs am bzw. vom Parkplatz übertragen werden.

11. Verfahren nach Anspruch 9 oder 10, **dadurch gekennzeichnet, dass** die Parkgenehmigungskontrollmittel aus einer Auflistung (13) bestehen, die von dem Parkscheinautomat (10) oder einem tragbaren Kontrollgerät, das Informationen von dem Parkscheinautomat (10) empfangen kann, bereitgestellt wird.

12. Verfahren nach einem der Ansprüche 1 bis 11, **dadurch gekennzeichnet, dass** die Informationen bezüglich der Identifizierung des Parkplatzes des Fahrzeugs aus einer den Parkscheinautomat (10) kennzeichnenden Nummer oder einer die Gebührenzone des Parkplatzes kennzeichnenden Nummer (14) bestehen.

13. Verfahren nach einem der Ansprüche 1 bis 12, **dadurch gekennzeichnet, dass** der Parkserver (2) dem Mobiltelefon (20) eine elektronische Bescheinigung sendet, die mindestens von den den Benutzer betreffenden Informationen, den den Parkplatz des Fahrzeugs betreffenden Informationen und den die Parkdauer betreffenden Informationen ausgehend berechnet wird.

14. Verfahren nach einem der Ansprüche 1 bis 13, **dadurch gekennzeichnet, dass** die Parkgebühr von einem Konto bei dem Betreiber des Mobilfunknetzes (3) oder des Parkservers (2) abgehoben wird.

15. Verfahren nach einem der Ansprüche 1 bis 13, **dadurch gekennzeichnet, dass** die Parkgebühr von einem bei dem Betreiber des Parkservers (2) im Voraus bezahlten Konto abgehoben wird.

16. Verfahren nach Anspruch 15, **dadurch gekennzeichnet, dass** das im Voraus bezahlte Konto über eine im Voraus bezahlte Rubbelkarte wieder auffüllbar ist.

17. Verfahren nach einem der Ansprüche 1 bis 13, **dadurch gekennzeichnet, dass** die Parkgebühr von einer elektronischen Geldbörsen- oder Bankkarte, die in das Mobiltelefon (20) eingefügt wird, abgehoben wird.
